# EUROPÄISCHE PATENTANMELDUNG

(11) **EP 1 179 452 A1**
(43) Veröffentlichungstag der Anmeldung: **13.02.2002**
(21) Anmeldenummer: 01117331.7
(22) Anmeldetag: 18.07.2001
(51) Int. Cl.: B60R 16/02, H04L 12/40

(54) **Redundantes Daten-Bussystem für Fahrzeuge**

(30) Priorität: 12.08.2000 DE 10039459
(71) Anmelder: Bayerische Motoren Werke Aktiengesellschaft, 80809 München (DE); DaimlerChrysler AG, 70567 Stuttgart (DE)
(72) Erfinder: Peller, Martin, 80796 München (DE); Berwanger, Josef, 85586 Poing (DE); Ebner, Christian, Dr., 80807 München (DE); Schedl, Anton, Dr., 80798 München (DE); Belschner, Ralf, Dr., 72124 Pliezhausen (DE); Hedenetz, Bernd, 73770 Denkendorf (DE); Minuth, Jürgen, 73079 Süssen (DE)

(57) **Zusammenfassung**

Bei einem redundanten Daten-Bussystem für Fahrzeuge, mit zwei Kanälen und mit mehreren Teilnehmern, die an den Kanälen angeschlossen sind, ist mindestens ein Teilnehmer im Gegensatz zu anderen Teilnehmern, die an beiden Kanälen angeschlossen sind, an nur einem Kanal angeschlossen.

## Beschreibung

Die Erfindung betrifft ein redundantes Daten-Bussystem für Fahrzeuge, mit zwei Kanälen und mit mehreren Teilnehmern, die an den Kanälen angeschlossen sind.

Während bei sicherheitstechnischen Systemen alle Maßnahmen darauf hinauslaufen, das System möglichst in einen sicheren Zustand, im allgemeinen ist es der abgeschaltete Zustand, zu verbringen, soll durch eine Redundanz die Verfügbarkeit der angeschlossenen Teilnehmer bzw. des durch einen Datenbus verbundenen Systems erhöht werden.

Es ist bekannt, sämtliche Teilnehmer an beiden Kanälen anzuschließen. Im Gegensatz zu einem Daten-Bussystem, das aus mindestens zwei vollständig redundanten Untersystemen besteht, entfallen zwar die dann notwendigen teuren Gateways und verringert sich der Synchronisierungsaufwand. Es entsteht aber der Nachteil, dass an sicherheitskritische Positionen, z.B. im Motorraum oder bei der Bremsanlage eines Fahrzeugs, alle Kanäle des redundanten Bussystems hingeführt werden müssen und sich damit die Möglichkeit ergibt, dass die Kanäle des redundanten Bussystems gemeinsam ausfallen.

Der Erfindung liegt die Aufgabe zugrunde, ein redundantes Datenbus-System zu schaffen, das bei weiterhin geringem Synchronisierungsaufwand bei Ausfall einzelner hochbelasteter Teilnehmer ein Totalausfall des Systems vermieden wird.

Die Erfindung löst diese Aufgabe mit den Merkmalen des Patentanspruchs 1.

Wesentliches Merkmal der Erfindung ist die konfigurierbare Redundanz. Nur die Teilnehmer, die hochbelastet sind und bei denen eine hohe Ausfallwahrscheinlichkeit besteht, werden nur an einem Kanal angeschlossen. Andere Teilnehmer werden an beiden Kanälen angeschlossen.

Besitzt das Bussystem einen Mechanismus zur Synchronisierung der Busteilnehmer bzw. der Kanäle des Bussystems, so können die redundanten Kanäle des Bussystems über jene Busteilnehmer synchronisiert werden, die an allen redundanten Kanälen angeschlossen sind. Die Busteilnehmer, die nur an einem Teil der Kanäle angeschlossen sind, synchronisieren sich auf jene Busteilnehmer auf, die an allen redundanten Kanälen angeschlossen sind.

Das Bussystem bietet auch die Möglichkeit, dass 2 oder mehrere Busteilnehmer eine sogenannte fehlertolerante Einheit bilden, d.h. die Busteilnehmer selbst sind redundant ausgelegt. Dabei kann ein Busteilnehmer an einem Teil der Kanäle (z.B. nur Kanal 1) angeschlossen sein, während der redundante Busteilnehmer an einem anderen Teil der Kanäle (z.B. nur Kanal 2) angeschlossen ist. Dadurch bleibt bei Fehlverhalten eines Busteilnehmer, der die angeschlossenen Kanäle stört, die volle Funktionalität durch den redundanten Busteilnehmer auf einem Teil der Kanäle erhalten.

Außerdem kann eine nur teilweise Verkabelung der Busteilnehmer an nur einzelne Kanäle eines redundanten Bussystems Kostenvorteile auf Grund günstigerer Verkabelungen ergeben.

Vorteilhafte Ausgestaltungen der Erfindung sind in den weiteren Patentansprüchen angegeben.

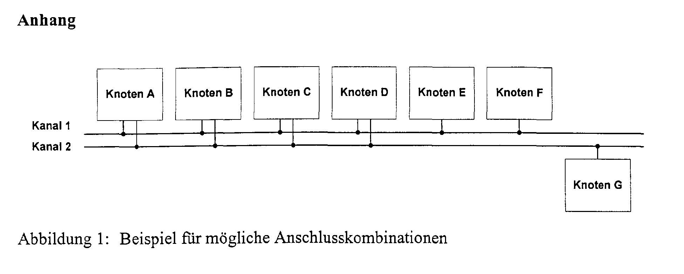

Das neue Bussystem besteht aus zwei redundanten Kanälen. Busteilnehmer können wahlweise an einem, mehreren oder allen Kanälen angeschlossen sein. Dies ist anhand eines in Fig. 1 dargestellten Ausführungsbeispiels gezeigt.

Beim Beispiel von Fig. 1 gibt es ein zweikanaliges Bussystem mit Kanal 1 und Kanal 2, an dem die Bus-Teilnehmer Knoten A, Knoten B, Knoten C, Knoten D, Knoten E, Knoten F und Knoten G angeschlossen sind. Knoten A, B, C und D sind an beiden Kanälen, Knoten E und F nur an Kanal 1 sowie Knoten G nur an Kanal 2 angeschlossen.

Über die redundanten Kanäle des Bussystems werden all die Teilnehmer synchronisiert, die an allen redundanten Kanälen angeschlossen sind. Die Teilnehmer, die nur an einem Teil der Kanäle angeschlossen sind, synchronisieren sich auf jene Teilnehmer auf, die an allen redundanten Kanälen angeschlossen sind.

Im dargestellten Beispiel bedeutet das, dass die Knoten A, B, C und D zur Synchronisierung der Kanäle herangezogen werden, während die Knoten E, F und G sich auf die durch Knoten A, B, C und D synchronisierten Kanäle aufsynchronisieren.

Zwei oder mehrere Teilnehmer bilden eine fehlertolerante Einheit, d.h. die Busteilnehmer selbst sind redundant ausgelegt. Dabei kann ein Busteilnehmer an einem Teil der Kanäle (z.B. nur Kanal 1) angeschlossen sein, während der redundante Busteilnehmer an einem anderen Teil der Kanäle (z.B. nur Kanal 2) angeschlossen ist. Dadurch bleibt bei Fehlverhalten eines Busteilnehmers, der die angeschlossenen Kanäle stört, die volle Funktionalität durch den redundanten Busteilnehmer auf einem Teil der Kanäle erhalten.

Im Beispiel aus Abbildung 1 könnten z.B. Knoten F und Knoten G eine solche fehlertolerante Einheit bilden. Knoten G liefert dabei im fehlerfreien Fall auf Kanal 2 das gleiche Ergebnis wie Knoten F auf Kanal 1. Weist Knoten F einen Fehler auf, der auch den Kanal 1 derart stört, dass Kanal 1 nicht mehr zur fehlerfreien Kommunikation herangezogen werden kann, so liefert Knoten G immer noch das korrekte Ergebnis über den Kanal 2.

Das oben genannte Verfahren beschränkt sich nicht auf Bustopologien, d.h. es ist in gleicher Weise auch für z.B. Bus-, Stern-, Ring- oder sonstige Topologien gültig. Der Redundanzgrad ist sowohl für die Busteilnehmer, als auch die Anzahl der Kanäle beliebig skalierbar.

Bei der Umsetzung des Bussystems als Kommunikationscontroller in Hardware können skalierte Varianten zur Kostenoptimierung vorgesehen werden. D.h., es werden Kommunikationscontroller mit z.B. einem, zwei oder mehreren Kanalanschlüssen erzeugt.

In Abbildung 1 sind die Knoten A, B, C und D mit einem Kommunikationscontroller auszustatten, der mindestens zwei Kanäle bedienen kann, während für die Knoten E, F und G ein kostengünstiger einkanaliger Kommunikationscontroller ausreicht.

Die Vorteile der Erfindung ergeben sich wie folgt:
- Erhöhte Sicherheit und Verfügbarkeit des Gesamtsystems bei Ausfall oder Fehlverhalten einzelner Busteilnehmer (d.h., es können von einzelnen Busteilnehmern nicht alle Kanäle des Bussystems lahm gelegt werden).
- Flexibilität in der redundanten Systemauslegung.
- Unterschiedliche Anwendungen können mit der gleichen Technologie realisiert werden.
- Möglichkeit zur nicht-redundanten Auslegung, d.h. Einsetzbarkeit in allen bisherigen Bereichen der Kommunikation, z.B. Powertrain Anwendungen.
- Mit dieser skalierbaren Redundanz lassen sich auch Gateways zwischen Bussystemen mit verschiedenen Fehlertoleranzanforderungen einfach realisieren.

Dabei werden mehrere, nicht redundante Bussysteme, die herkömmlich mit ein oder mehreren Gateways verbunden sind, so ausgelegt, dass sie als ein einziges redundantes Bussystem mit mehreren Kanälen ausgeführt werden. Nur die Gateways sind an allen Kanälen angeschlossen, die übrigen Busteilnehmer hängen am jeweiligen Kanal. Die Synchronisierung erfolgt über die Gateways.

Im Beispiel aus Abbildung 1 könnten die Kanäle 1 und 2 jeweils ein eigenständiges Bussystem sein, das über die Gateways Knoten A, B, C und D miteinander verbunden und synchronisiert wird.

## Patentansprüche

1. Redundantes Daten-Bussystem für Fahrzeuge, mit zwei Kanälen und mit mehreren Teilnehmern, die an den Kanälen angeschlossen sind, **dadurch gekennzeichnet, dass** mindestens ein Teilnehmer im Gegensatz zu anderen Teilnehmern, die an beiden Kanälen angeschlossen sind, an nur einem Kanal angeschlossen ist.

2. System nach Anspruch 1, **dadurch gekennzeichnet, dass** mindestens ein weiterer Teilnehmer allein an dem anderen Kanal angeschlossen ist.
